# EUROPEAN PATENT SPECIFICATION

(11) **EP 4 497 610 B1**
(45) Date of publication and mention of the grant of the patent: **16.07.2025**
(21) Application number: 24187920.4
(22) Date of filing: 11.07.2024
(51) Int. Cl.: B60C 11/12, B60C 11/03

(54) **PNEUMATIC TIRE**
LUFTREIFEN
PNEUMATIQUE

(30) Priority: 28.07.2023 JP 2023123440
(43) Date of publication of application: 29.01.2025
(73) Proprietor: Toyo Tire Corporation, Itami-shi, Hyogo 664-0847 (JP)
(72) Inventor: ISHIHARA, Seiya, Hyogo, 664-0847 (JP)
(74) Representative: Müller-Boré & Partner Patentanwälte PartG mbB

(56) References cited:
- EP-B1- 0 125 437
- EP-B1- 3 354 485
- EP-B1- 3 354 486
- EP-B1- 3 805 019
- WO-A1-2012/164449
- DE-A1- 102020 105 478

## Description

### BACKGROUND OF THE INVENTION

### Field of the Invention

The present invention relates to a pneumatic tire.

### Related Art

Conventionally, a tire has been known which includes a tread including a tread surface which contacts the road surface. This tread has a so-called block pattern in which a plurality of blocks are defined by a plurality of grooves extending in the tire-circumferential direction or in a direction intersecting the tire-circumferential direction. The blocks are arranged in the tire-circumferential direction. Patent Document 1 discloses a pneumatic tire in which a plurality of thin grooves called sipes are formed in such a block. Sipes have a wavy shape with amplitude in a tire surface view. Sipes increases the edge effect and improves grip performance of the tire.

Patent Document 1: EP3805019A1

Document EP 0 125 437 B1 describes a tread for a pneumatic tire comprising raised elements which are provided with incisions having wavy or broken line paths. The incisions have a wide less than 1 mm and have lower amplitudes at the bottom of the incisions than at the surface of the tread.

Document EP 3 805 019 B1 describes a pneumatic vehicle tire with a tread with profile elements, such as profile blocks, which are provided with incisions extending parallel to one another in a plan view and to the axial direction at an angle of 0° to 50°. Each incision in the plan view runs over at least a section in the form of a harmonic wave and each incision extends radially inwards from the outer surface of the profile element with a continuous reduction in the amplitude of the harmonic wave shape. The amplitude of the harmonic waveform of the incision decreases progressively from the outer surface of the profile element radially inwards.

Document EP 3 354 485 B1 describes a tread kerf of a snow tire which easily discharges snow trapped in the kerf. The tread kerf is formed on an outer surface of a block of a tread of the snow tire and has a trapezoidal wave structure extending along the surface and formed in a depth direction of the block, and an amplitude of the trapezoidal wave structure is gradually decreased in a direction from a tire surface to a tire base. Since the amplitude of the tread kerf is gradually decreased in the direction from the tire surface to the tire base, the tread kerf may easily discharge snow trapped in the kerf to the outside of the tire block through the tire surface, even if a small space formed by the kerf is filled with snow when the tire is rotated on a snowy road.

### SUMMARY OF THE INVENTION

However, for the above sipes shown in Patent Document 1, the amplitude is largest at the tire surface, and the amplitude decreases as approaching the bottom. In a cross-sectional view in the depth direction, the sipe gently curves at the middle in the depth direction. Rubber between sipes tends to deform at and around the curving point of the sipe at the middle in the depth direction during braking and starting off of the vehicle. For this reason, the contact area of the rubber surface between sipes decreases and the traction declines, and block chipping occurs and the durability declines.

Therefore, the present invention has an object of providing a pneumatic tire having wavy-shaped sipes with improved traction and durability.

The claimed invention is defined by the features set forth in the appended independent claim. Additional embodiments of the claimed invention are defined by the dependent claims.

The present invention makes it possible to provide a pneumatic tire having wavy-shaped sipes with improved traction and durability.

### BRIEF DESCRIPTION OF THE DRAWINGS

FIG. 1 is a partial expanded drawing of an outer circumferential surface of a tire, showing a tread pattern of the pneumatic tire according to an embodiment;
FIG. 2 is a perspective view showing a shoulder sipe according to the embodiment;
FIG. 3A is a view of the arrow direction along IIIA-IIIA in FIG. 2;
FIG. 3B is a cross-sectional view along the line IIIB-IIIB in FIG. 2;
FIG. 3C is a cross-sectional view along the line IIIC-IIIC in FIG. 2;
FIG. 3D is a cross-sectional view along the line IIID-IIID in FIG. 2;
FIG. 4 is a cross-sectional view along the line IV-IV in FIG. 3A;
FIG. 5 is a perspective view showing a central sipe according to the embodiment;
FIG. 6A is a view of the arrow direction along VIA-VIA in FIG. 5;
FIG. 6B is a cross-sectional view along the line VIIB-VIIB in FIG. 5;
FIG. 6C is a cross-sectional view along the line VIIC-VIIC in FIG. 5;
FIG. 6D is a cross-sectional view along the line VIID-VIID in FIG. 5;
FIG. 7 is a cross-sectional view along the line VII-VII in FIG. 6A;
FIG. 8A is a plan view schematically showing a wave-shaped opening in a shoulder sipe of the embodiment;
FIG. 8B is a plan view schematically showing a wave-shaped bottom in a shoulder sipe of the embodiment;
FIG. 9A is a plan view schematically showing a wave-shaped opening in a central sipe of the embodiment;
FIG. 9B is a plan view schematically showing a wave-shaped bottom in a central sipe of the embodiment;
FIG. 10A is a plan view schematically showing a wave-shaped opening in an intermediate sipe of the embodiment; and
FIG. 10B is a plan view schematically showing a wave-shaped bottom in an intermediate sipe of the embodiment.

### DETAILED DESCRIPTION OF THE INVENTION

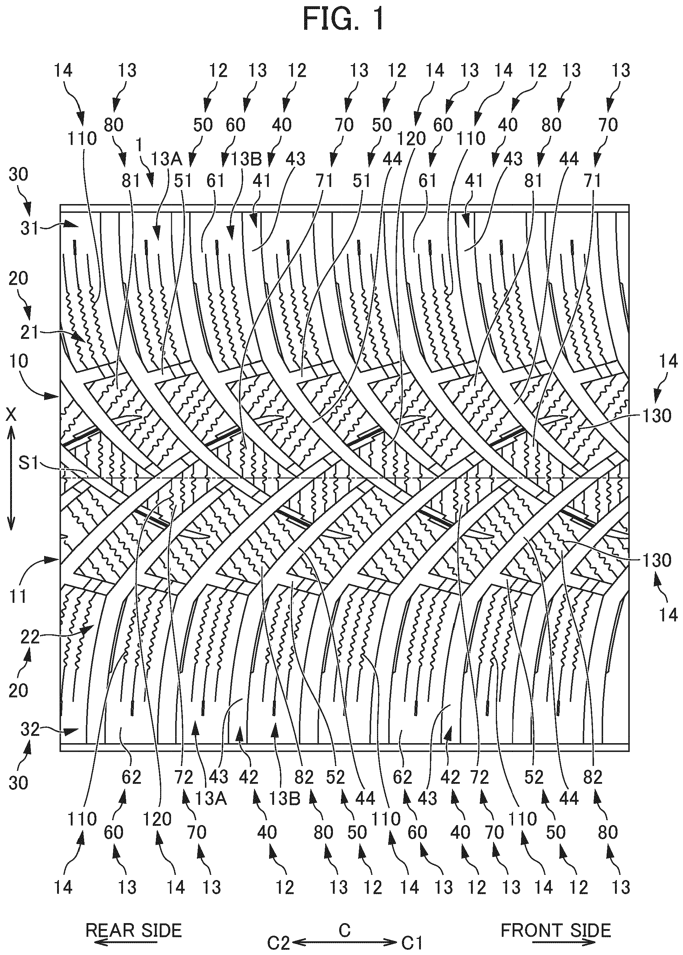

Hereinafter, an embodiment will be described while referencing the drawings. FIG. 1 is a view expanding a part of the outer circumferential surface of a tire 1 in a plan view, the tire 1 being a pneumatic tire according to the embodiment. The tire 1 according to the embodiment can be applied to a tire for passenger vehicles; however, besides this, it can be also applied to a tire for various vehicles such as light trucks, trucks, and buses

FIG. 1 shows a tire-axial direction X and a tire-circumferential direction C. In the tire 1 according to the embodiment, one side of the tire-circumferential direction is defined as a rotational direction during forward advancement of the vehicle on which the tire 1 is mounted, and a C1 direction shown in FIG. 1 corresponds to this rotational direction. It should be noted that the front side referred to in the following description is the right side of FIG. 1, and indicates a side in the advancing direction of the vehicle defined as the tire rotation direction C1. The rear side is the left side in FIG. 1, and indicates the reverse direction of the vehicle defined as the rotation direction C2 which is the opposite direction to the tire rotation direction C1.

FIG. 1 shows the tread 10 of the tire 1, and shoulders 30 on both tire-axial sides of the tread 10. The shoulder 30 is a portion transitioning from the tread 10 to each of the sidewalls (not shown) on both sides in the tire axial direction, and is a portion corresponding to the shoulder of the tire 1. The shoulder 30 includes a first shoulder 31 on the upper side in FIG. 1, and a second shoulder 32 on the lower side in FIG. 1.

### (Tread Pattern)

The tread 10 has a tread surface 20 to be in contact with the road surface. A tread pattern 11 is formed on the tread surface 20. The tread pattern 11 is mainly designed by a plurality of grooves 12 and a plurality of blocks 13 defined by the grooves 12. FIG. 1 shows a tire equatorial plane S1, which is a virtual line extending at the tire-axial center of the tread surface 20 along the tire circumferential direction.

When defining the tire axial direction as the left/right direction, the tread pattern 11 is substantially left/right symmetrical with the tire equatorial plane S1 as the symmetrical line, except that the tread pattern 11 is somewhat displaced in the tire circumferential direction. The tread surface 20 includes a first tread surface 21 close to the first shoulder 31, and a second tread surface 22 close to the second shoulder 32, with the tire equatorial plane S1 as a boundary.

### (Grooves of Tread Pattern)

The grooves 12 of the tread pattern 11 include a plurality of slanted grooves 40 and a plurality of communication grooves 50. The slanted grooves 40 and the communication grooves 50 according to the embodiment are grooves having a groove width exceeding 1 mm.

The slanted grooves 40 are grooves extending from both tire-axial sides toward the tire equatorial plane S1. These slanted grooves 40 are arranged at intervals in the tire-circumferential direction. The plurality of slanted grooves 40 includes first slanted grooves 41 extending from the first shoulder 31 toward the tire equatorial plane S1, and second slanted grooves 42 extending from the second shoulder 32 toward the tire equatorial plane S1. The first slanted groove 41 is formed mainly on the first tread surface 21, and the second sloped groove 42 is mainly formed on the second tread surface 22.

The communication grooves 50 include first communication grooves 51 and second communication grooves 52. Each of the first communication groove 51 communicates with the pair of first slanted grooves 41 adjacent in the tire-circumferential direction. Each of the second communication grooves 52 communicates with the pair of second slanted grooves 42 adjacent in the tire-circumferential direction.

The first communication grooves 51 are formed in the first tread surface 21, and the second communication grooves 52 are formed in the second tread surface 22.

Since the tread pattern 11 is left/right symmetrical, the first slanted grooves 41 and second slanted grooves 42 have similar features, and the first communication grooves 51 and second communication grooves 52 have similar features.

The first slanted grooves 41 are grooves extending from the first shoulder 31 toward the tire equatorial plane S1, in which the slanted grooves 41 generally slope relative to the tire-circumferential direction while gradually curving so that the slanted grooves 41 extend toward the front side and is convex toward the rear side. The second slanted grooves 42 are grooves extending from the second shoulder 32 toward the tire equatorial plane S1, in which the slanted grooves 42 generally slope relative to the tire-circumferential direction while gradually curving so that the slanted grooves 42 extend toward the front side and is convex toward the rear side. Herein, each slanted grooves 41, 42 has an end close to the shoulder 30 (first shoulder 31, second shoulder 32) defined as a base end, and an end close to the tire equatorial plane S1 defined as a leading end.

The first slanted groove 41 includes a base-end side curved part 43 and a leading-end side curved part 44. The base-end side curved part 43 extends from the base end to a portion beyond the tire-width center of the first tread surface 21. The leading-end side curved part 44 curves from an end close to the tire equatorial plane S1 of the base-end side curved part 43 toward the tire equatorial plane S1 to the leading end. The base-end side curved part 43 curves with a relatively small curvature, and is slightly sloped toward the front side. The leading-end side curved part 44 curves with a similar curvature to the base-end side curved part 43, and slopes to the front side at a sharper angle than the base-end side curved part 43.

The second slanted groove 42 has a similar form to the first slanted groove 41. In other words, the second slanted groove 42 includes a based-end curved part 43 and a leading-end side curved part 44. The base-end curved part 43 extends from the base end to a portion beyond the tire-width center of the second tread surface 22. The leading-end side curved part 44 curves from an end close to the tire equatorial plane S1 of the base-end side curved part 43 toward the tire equatorial plane S1 to the leading end.

The plurality of first slanted grooves 41 arranged in the tire-circumferential direction have alternately different lengths. The leading end of the shorter first slanted grooves 41 terminates such that it merges with the second slanted groove 42 immediately before the tire equatorial plane S1. The leading end of the longer first slanted groove 41 passes through the tire equatorial plane S1, and then terminates after crossing the leading-end side curved part 44 of the two second slanted grooves 42 adjacent in the tire-circumferential direction.

The length of the second slanted grooves 42 also differ alternately in the tire-circumferential direction similarly to the first slanted grooves 41. In other words, the leading end of the shorter second slanted groove 42 terminates such that it merges with the first slanted groove 41 immediately before the tire equatorial plane S1. The leading end of the longer second slanted groove 42 passes through the tire equatorial plane S1, and then terminates after crossing the leading-end side curved part 44 of the two first slanted grooves 41 adjacent in the tire-circumferential direction.

The first communication groove 51 extends from the end of the leading-end side curved part 44 of the first slanted groove 41 close to the base-end side curved part 43, straight toward a bending point of the first slanted groove 41 on the front side in the tire-circumferential direction. The bending point is a point where the first slanted groove 41 transitions from the base-end side curved part 43 to the leading-end side curved part 44.

The second communication groove 52 is similar to the first communication groove 51, and extends from the end of the leading-end side curved part 44 of the second sloped groove 42 close to the base-end side curved part 43, straight to a bending point of the second slanted groove 42 on the front side in the tire-circumferential direction. The bending point is a point where the second sloped groove 42 transitions from the base-end side curved part 43 to the leading-end side curved part 44.

The first communication groove 51 and second communication groove 52 both slope relative to the tire-circumferential direction so as to be directed toward the outer side in the tire-circumferential direction, as extending from the rear side to the front side.

### (Blocks of Tread Pattern)

The blocks 13 of the tread pattern 11 include a plurality of shoulder blocks 60 arranged in the outermost positions in the tire-axial direction, a plurality of central blocks 70 arranged at the center in the tire-axial direction, and a plurality of intermediate blocks 80 arranged between the should blocks 60 and the central blocks 70 in the tire-axial direction.

The shoulder blocks 60 include first shoulder blocks 61 close to the first shoulder 31, and second shoulder blocks 62 close to the second shoulder 32.

Each of the first shoulder blocks 61 are defined as an approximately rectangular shape, by the pair of first slanted grooves 41 adjacent in the tire-circumferential direction and the first communication groove 51. The edge of the first shoulder block 61 close to the first shoulder 31 continues to the outer surface of the first shoulder 31. The plurality of first shoulder blocks 61 are arranged in the tire-circumferential direction to sandwich the base-end side curved parts 43 of the first slanted grooves 41.

Each of the second shoulder blocks 62 is defined as an approximately rectangular shape, by the pair of second slanted grooves 42 adjacent in the tire-circumferential direction and the second communication groove 52. The edge of the second shoulder block 62 close to the second shoulder 32 continues to the outer surface of the second shoulder 32. The plurality of second shoulder blocks 62 are arranged in the tire-circumferential direction to sandwich the base-end side curved parts 43 of the second slanted grooves 42.

The first shoulder blocks 61 and the second shoulder blocks 62, which are arranged in the tire-circumferential direction to sandwich the base-end side curved parts 43 of the slanted grooves 40, may be arranged at equal intervals in the tire-circumferential direction, or may be arranged at variable pitch, which are irregular intervals.

The central blocks 70 are arranged in a manner such that they span both the first tread surface 21 and second tread surface 22. In other words, the tire equatorial plane S1 passes through all of the central blocks 70. The plurality of central blocks 70 includes a plurality of first central blocks 71 existing mainly on the first tread surface 21, and a plurality of second central blocks 72 existing mainly on the second tread surface 22.

The first central block 71 has a larger proportion occupying the surface area in the first tread surface 21 than in the second tread surface 22. Each of the first central blocks 71 is defined as a substantially rectangular shape by the leading-end side curved parts 44 of the pair of first slanted grooves 41 adjacent in the tire-circumferential direction, and the leading-end side curved part 44 of the second slanted groove 42 having a greater length among the plurality of second slanted grooves 42.

The second central block 72 has a greater proportion occupying the surface area in the second tread surface 22 than in the first tread surface 21. Each of the second central blocks 72 is defined as a substantially rectangular shape, by the leading-end side curved parts 44 of the pair second slanted grooves 42 adjacent in the tire-circumferential direction, and the leading-end side curved part 44 of the first slanted groove 41 having a larger length among the plurality of first slanted grooves 41.

Each of the plurality of the first central blocks 71 and each of the plurality of second central blocks 72 are alternately arranged in the tire-circumferential direction.

The intermediate block 80 includes a first intermediate block 81 close to the first tread surface 21, and a second intermediate block 82 close to the second tread surface 22.

Each of the first intermediate blocks 81 is defined as an approximately rectangular shape, by the leading-end side curved parts 44 of the pair of first slanted grooves 41 adjacent in the tire-circumferential direction, the first communication groove 51, and the leading-end side curved part 44 of the second slanted groove 42 having a longer length. The plurality of first intermediate blocks 81 are arranged in the tire-circumferential direction to sandwich the leading-end side curved parts 44 of the first slanted grooves 41.

Each of the second intermediate blocks 82 is defined as an approximately rectangular shape, by the leading-end side curved parts 44 of the pair of second slanted grooves 42 adjacent in the tire-circumferential direction, the second communication groove 52, and the leading-end side curved part 44 of the second slanted groove 42 having a longer length. The plurality of second intermediate blocks 82 are arranged in the tire-circumferential direction to sandwich the leading-end side curved parts 44 of the second slanted grooves 42.

The first intermediate blocks 81 are arranged between the shoulder blocks 60 and the central blocks 70 in the tire-axial direction. The second intermediate blocks 82 are arranged between the shoulder blocks 60 and the central blocks 70 in the tire-axial direction.

As described above, the tire equatorial plane S1 passes through all of the central blocks 70. On the other hand, the tire equatorial plane S1 neither passes through the shoulder blocks 60 nor the intermediate blocks 80.

In the first tread surface 21, as the plurality of blocks 13 along the first slanted groove 41, block columns 13A and block columns 13B are alternately arranged in the tire-circumferential direction. The block column 13A includes, as the three blocks 13, a first shoulder block 61, a first intermediate block 81, and a first central block 71 extending in this order from the first shoulder 31 toward the tire equatorial plane S1. The block column 13B includes, as the two blocks 13, a first shoulder block 61 and a first intermediate block 81 extending in this order from the first shoulder 31 toward the tire equatorial plane S1.

Similarly, in the second tread surface 22, as the plurality of blocks 13 along the second slanted groove 42, the block columns 13A and the block columns 13B are alternately arranged in the tire-circumferential direction. The block column 13A includes, as the three blocks 13, the second shoulder block 62, the second intermediate block 82, and the second central block 72 extending in this order from the second shoulder 32 toward the tire equatorial plane S1. The block column 13B includes, as the two blocks 13, the second shoulder block 62 and the second intermediate block 82 extending in this order from the second shoulder 32 side toward the tire equatorial plane S1.

In both the first tread surface 21 and the second tread surface 22, the intermediate block 80 in the column without the central block 70 has a longer length in the extending direction along the slanted groove 40, than the intermediate block 80 in the column with the central block 70.

On the other hand, the shoulder block 60 and the central block 70 have the equal length in the extending direction along the slanted grooves 40.

### (Sipes of Blocks)

As shown in FIG. 1, each of the blocks 13 of the tread 10 has a plurality of sipes 14. The plurality of sipes 14 includes shoulder sipes 110, central sipes 120, and intermediate sipes 130. The shoulder sipes 110 are respectively formed in the first shoulder blocks 61 and the second shoulder blocks 62 (hereinafter, may be collectively called "shoulder block 60"). The central sipes 120 are respectively formed in the first central blocks 71 and the second central blocks 72 (hereinafter, may be collectively called "central block 70"). The intermediate sipes 130 are respectively formed in the first intermediate blocks 81 and the second intermediate blocks 82 (hereinafter, may be collectively called "intermediate block 80"). All sipes have a smaller groove width than the aforementioned slanted grooves 40 and the communication grooves 50, and this groove width is no more than 1 mm. The number of sipes 14 per each blocks 13 is arbitrary; however, sipes 14 of the number on the order of 2 to 5, for example, are arranged in one block 13.

The shoulder sipes 110, the central sipes 120, and the intermediate sipes 130 respectively open in the surfaces of the blocks 60, 70, and 80, and have a wavy shape as a whole in a tire surface view. The depth direction of the sipes 110, 120, 130 substantially follows the tire-radial direction.

As shown in FIG. 1, the shoulder block 60 has a plurality of shoulder sipes 110. The shoulder sipes 110 extend almost straight as a whole. In each of the shoulder blocks 60, the plurality of shoulder sipes 110 are arranged in parallel to each other at intervals. The plurality of shoulder sipes 110 extend substantially in parallel to the extending direction of the shoulder blocks 60 along the slanted groove 40. In other words, the shoulder sipes 110 extend in the direction intersecting the tire-circumferential direction. The end on the tire-axial inner side (tire equatorial plan S1 side) of the shoulder sipe 110 communicates with the first communication groove 51 and the second communication groove 52 (hereinafter, may be collectively called "communication groove 50"). The end on the tire-axial outer side (shoulder 30 side) of the shoulder sipe 110 terminates without reaching the end on the tire-axial outer side of the shoulder block 60.

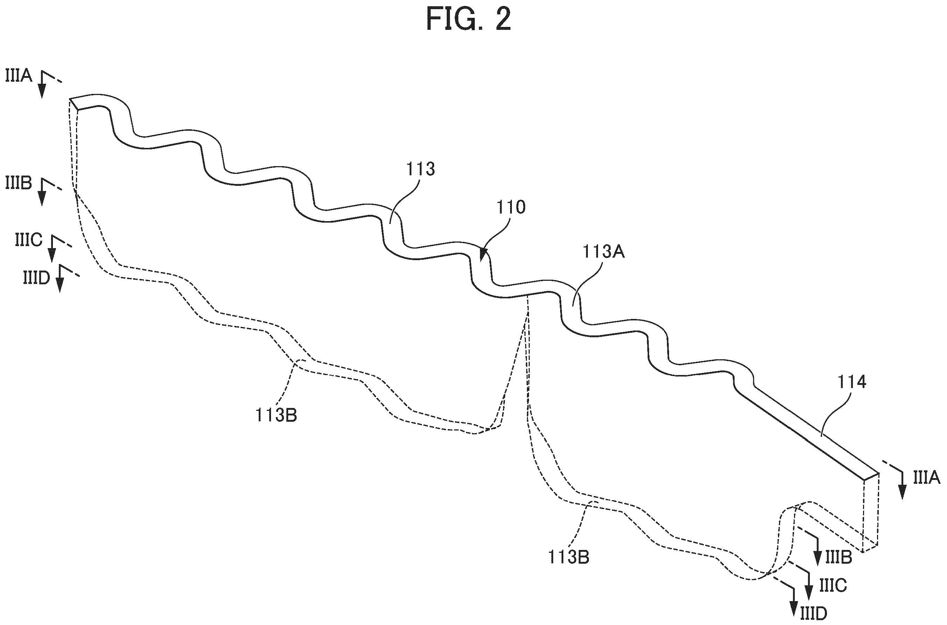

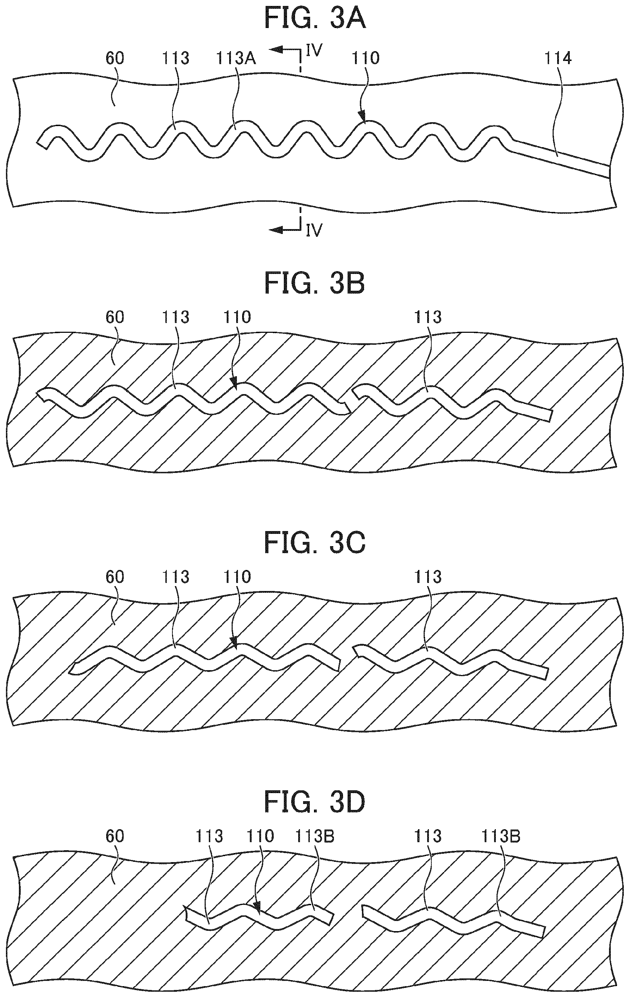

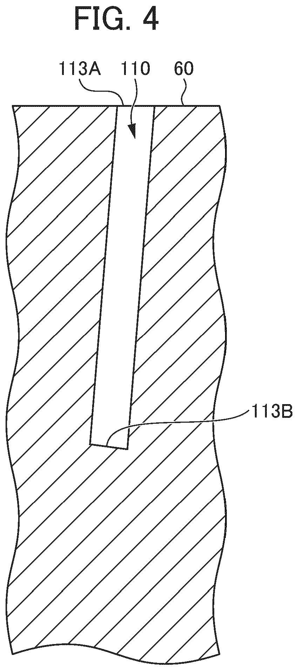

FIG. 2 is a perspective view showing one shoulder sipe 110. FIG. 3A is an arrow view along IIIA-IIIA in FIG. 2. FIG. 3B is a cross-sectional view along the line IIIB-IIIB in FIG. 2. FIG. 3C is a cross-sectional view along the line IIIC-IIIC in FIG. 2. FIG. 3D is a cross-sectional view along the line IIID-IIID in FIG. 2. FIG. 4 is a cross-sectional view along the line IV-IV in FIG. 3A.

As shown in FIG. 2, the shoulder sipe 110 has a wavy-shaped part 113 and a sipe bridge 114. The wavy-shaped part 113 is formed in a wavy shape extending along the extending direction. The sipe bridge 114 extends straight from an end of the wavy shaped part 113 to the communication groove 50, and has a smaller depth than that of the wavy shaped part 113. In addition, the shoulder sipe 110 has an opening 113A in the surface of the shoulder block 60, and a bottom 113B. The wavy shaped part 113 occupies a large portion, e.g., at least 70% of the extending direction length of the shoulder sipe 110. The depth of the wavy shaped part 113, a length between the opening 113A and the bottom 113B of is set on the order of 5.0 mm to 7.0 mm, for example, and the depth of the sipe bridge 114 is set on the order of 2.0 mm to 4.0 mm, for example; however, they are not limited thereto.

As shown in FIG. 2 and FIGS. 3A to 3D, the wavy shaped part 113 of the shoulder sipe 110 is formed in a wavy shape having a fixed period and the wavy shape extends from the opening 113A to the bottom 113B. The amplitude of the wavy shape part 113 is largest at the opening 113A and smallest at the bottom 113B. In other words, the shoulder sipe 110 has a wavy shape at the bottom 113B, and the bottom 113B does not have a linear shape. The amplitudes of the openings 113A at the surface of the shoulder block 60 of the plurality of shoulder sipes 110 are equal to each other. Furthermore, the amplitude of the shoulder sipe 110 decreases at a fixed or constant rate of change from the opening 113A to the bottom 113B. In addition, as shown in FIG. 4, the width of a gap between opposing inner surfaces of the shoulder sipe 110 has a substantially fixed dimension from the opening 113A to the bottom 113B. Accordingly, in a cross-sectional view in the depth direction which is substantially orthogonal to the extending direction of the shoulder sipe 110, as shown in FIG. 4, the shoulder sipe 110 is linear from the opening 113A to the bottom 113B. The width of the shoulder sipe 110 is preferably at least 0.5 mm and no more than 1.5 mm.

It should be noted that the shoulder sipe 110 of the present embodiment has a portion in which part of the wavy shape part 113 is not continuous in the extending direction, i.e., a part is missing, as shown in FIG. 2 and FIGS. 3B to 3D. This is an example of some aspects of the shoulder sipe 110. The shoulder sipe 110 is not to be limited to this, and may have a continuous wavy shape.

As shown in FIG. 1, each of the central blocks 70 has a plurality of central sipes 120. The central sipes 120 extend straight as a whole. In each of the central blocks 70, the plurality of central sipes 120 are arranged in parallel to each other at intervals. The plurality of central sipes 120 extend substantially in parallel with the tire-axial direction. In other words, the central sipe 120 extends in a direction intersecting the tire-circumferential direction. Each of both ends of the central sipe 120 is continuous with either the first slanted groove 41 or the second slanted groove 42 (hereinafter, may be collectively called "slanted groove 40").

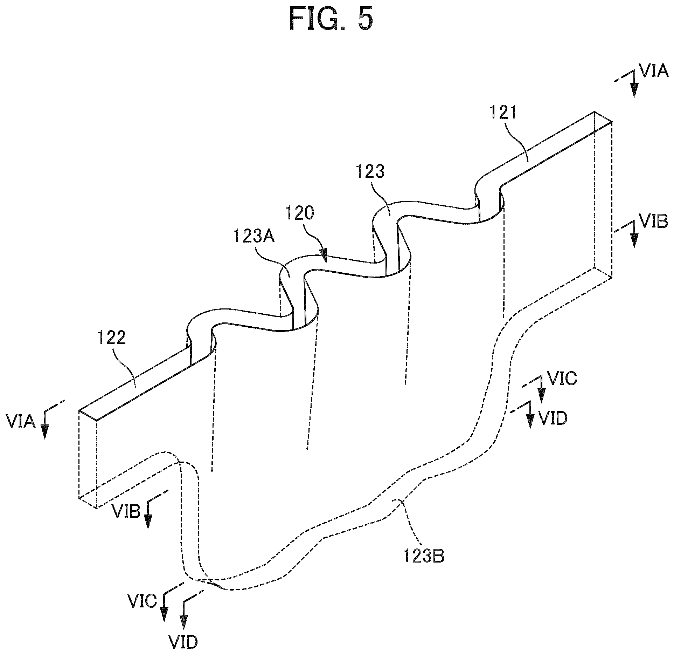

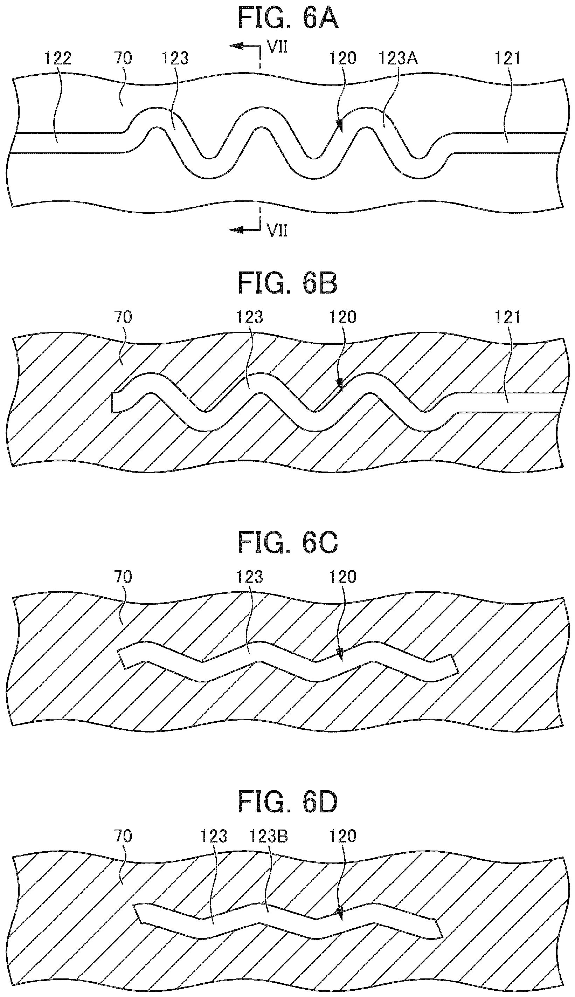

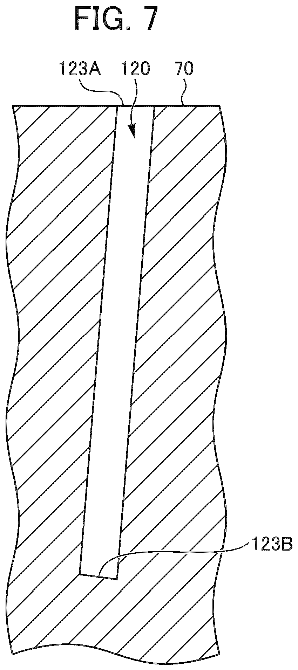

FIG. 5 is a perspective view showing one central sipe 120. FIG. 6A is an arrow view along VIA-VIA in FIG. 5. FIG. 6B is a cross-sectional view along the line VIB-VIB in FIG. 5. FIG. 6C is a cross-sectional view along the line VIC-VIC in FIG. 5. FIG. 6D is a cross-sectional view along the line VID-VID in FIG. 5. FIG. 7 is a cross-sectional view along the line VII-VII in FIG. 6A.

As shown in FIG. 5, the central sipe 120 includes a wavy shape part 123, a first sipe bridge 121, and a second sipe bridge 122. The wavy shape part 123 is formed in a wavy shape along the extending direction. The first sipe bridge 121 extends straight from one end of the wavy shape part 123 to the slanted groove 40, and has a smaller depth than the wavy shape part 123. The second sipe bridge 122 extends straight from the other end of the wavy shape part 123 to the slanted groove 40, and has a smaller depth than the first sipe bridge 121.

In addition, the central sipe 120 includes an opening 123A at the surface of the central block 70, and a bottom 123B. The wavy shape part 123 occupies at least 50%, for example, of the length in the extending direction of the central sipe 120. The depth of the wavy shape part 123, i.e., a length between the opening 123A and the bottom 123B is set on the order of 6.0 mm to 7.0 mm, for example, the depth of the first sipe bridge 121 is set on the order of 4 mm, for example, and the depth of the second sipe bridge 122 is set on the order of 2 mm, for example; however, they are not limited thereto.

As shown in FIG. 5 and FIGS. 6A to 6D, the wavy shape part 123 of the central sipe 120 is formed in a wavy shape having a fixed period and the wave shape extends from the opening 123A to the bottom 123B. The amplitude of the wavy shape part 123 is largest at the opening 123A and smallest at the bottom 123B. In other words, the central sipe 120 has a wavy shape at the bottom 123B, and the bottom 123B does not have a linear shape. The amplitudes of the openings 123A in the surfaces of the central blocks 70 of the plurality of central sipes 120 are equal to each other. Furthermore, the amplitude of the central sipe 120 decreases at a fixed rate of change from the opening 123A to the bottom 123B. In addition, as shown in FIG. 7, the width of a gap between opposing inner surfaces of the central sipe 120 has a substantially fixed dimension from the opening 123A to the bottom 123B. Accordingly, in the cross-sectional view in the depth direction which is substantially orthogonal to the extending direction of the central sipe 120 as shown in FIG. 7, the central sipe 120 is linear from the opening 123A to the bottom 123B. The width of the central sipe 120 is preferably at least 0.5 mm and no more than 1.5 mm.

As shown in FIG. 1, each of the intermediate blocks 80 has a plurality of intermediate sipes 130. The intermediate sipe 130 extends straight as a whole. In each of the intermediate blocks 80, the plurality of intermediate sipes 130 are arranged in parallel to each other at intervals. The plurality of intermediate sipes 130 all slant relative to the tire-circumferential direction so as to be directed to the outer side in the tire-circumferential direction, as extending from the rear side to the front side. In other words, the intermediate sipe 130 extends in a direction which intersects the tire-circumferential direction. Each of both ends of the intermediate sipe 130 communicate with either the slanted groove 40 or the communication groove 50.

The intermediate sipe 130 has a similar configuration to the aforementioned central sipe 120. In other words, although omitted from illustration, the intermediate sipe 130 has similar portions to the wavy shape part 123, the first sipe bridge 121, and the second sipe bridge 122 of the central sipe 120. Then, the period of the wavy shape part of the intermediate sipe 130 is fixed, and the amplitude is largest at the opening at the surface of the central block 70 and smallest at the bottom. The amplitudes of the openings, at the surfaces of the intermediate blocks 80, of the plurality of intermediate sipes 130 are equal to each other. The width of the intermediate sipe 130 is substantially fixed from the opening to the bottom. Accordingly, in a cross-sectional view in the depth direction which is substantially orthogonal to the extending direction of the intermediate sipe 130, the intermediate sipe 130 is linear from the opening to the bottom. The width of the intermediate sipe 130 is preferably at least 0.5 mm and no more than 1.5 mm.

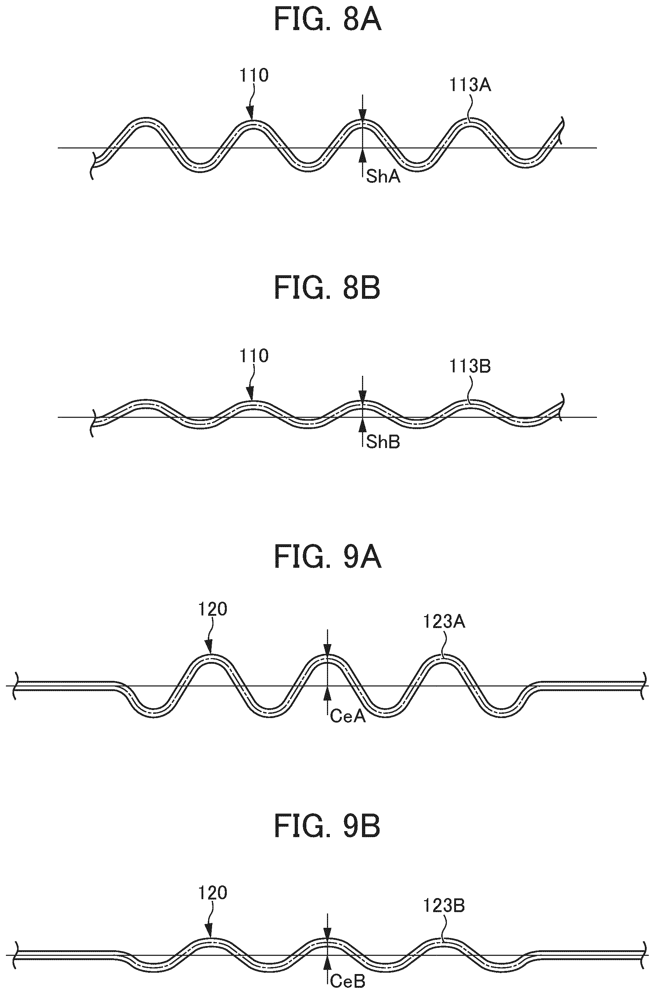

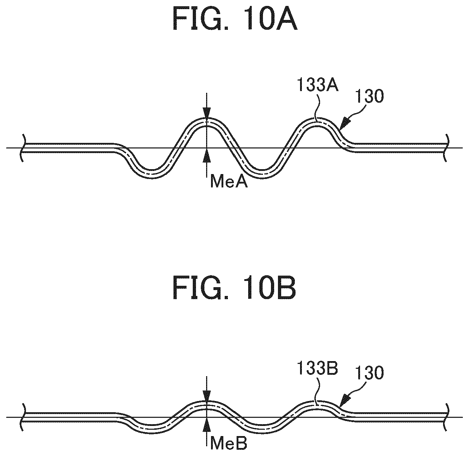

FIG. 8A is a plan view schematically showing an opening 113A of a wavy shape in the shoulder sipe 110, and shows amplitude ShA of the opening 113A. FIG. 8B is a plan view schematically showing a bottom 113B of a wavy shape in the shoulder sipe 110, and shows amplitude ShB of the bottom 113B. FIG. 9A is a plan view schematically showing an opening 123A of a wavy shape in the central sipe 120, and shows amplitude CeA of the opening 123A. FIG. 9B is a plan view schematically showing a bottom 123B of a wavy shape in the central sipe 120, and shows amplitude CeB of the bottom 123B. FIG. 10A is a plan view schematically showing an opening 133A of a wavy shape in the intermediate sipe 130, and shows amplitude MeA of the opening 133A. FIG. 10B is a plan view schematically showing a bottom 133B of a wavy shape in the intermediate sipe 130, and shows amplitude MeB of the bottom 133B.

In the present embodiment, the above-mentioned amplitudes ShA, CeA, and MeA are not equal. Specifically, the amplitude ShA of the shoulder sipe 110 is the smallest. The amplitude CeA of the central sipe 120 and the amplitude MeA of the intermediate sipe 130 are equal to each other, or the amplitude CeA of the central sipe 120 is greater than the amplitude MeA of the intermediate sipe 130. In other words, it is specified as "CeA ≧ MeA > ShA".

With the condition of "CeA ≧ MeA > ShA", these amplitudes CeA, MeA and ShA are preferably each at least 0.5 mm and no more than 1.5 mm.

In addition, the amplitude ShB of the bottom 113B of the shoulder sipe 110, the amplitude CeB of the bottom 123B of the central sipe 120, and the amplitude MeB of the bottom 133B of the intermediate sipe 130 are preferably each at least 0.1 mm and no more than 0.6 mm.

In addition, the ratio A/B for each sipe is preferably at least 4.0 and no more than 7.0, where A is the amplitudes of the openings 113A, 123A, 133A of the respective sipes 110, 120, 130, and B is the amplitudes of the bottoms 113B, 123B, 133B of the respective sipes 110, 120, 130. In other words, each of ShA/ShB of the shoulder sipe 110, CeA/CeB of the central sipe 120, and MeA/MeB of the intermediate sipe 130 is preferably at least 4.0 and no more than 7.0.

According to the claimed invention, the following effects are exerted.

The bottom of each of the sipes 14 in the present embodiment does not have a linear shape along the extending direction of the sipe 14, but rather has a wavy shape. Upon stress acting on the block 13 of the tread surface 20 such as during braking or during starting off of the vehicle, both side portions on the sipe 14 of the block 13 tend to collapse according to the direction in which this stress acts.
At this time, the bottom of the sipe 14 which has a wave shape as in the embodiment produces a force resisting stress and the forces is higher than that of the bottom of the sipe which has a linear shape. Therefore, the block 13 hardly distorts, and the decline in contact area of the surface of the block 13 is suppressed. For this reason, the traction improves. In addition, since distortion of the block 13 is suppressed, defects such as block chipping where a part or the entirety of the block 13 comes off is suppressed, whereby durability of the tire 1 improves.

In each of the sipes 14 of the present embodiment, the amplitude decreasing at a fixed rate of change from the opening to the bottom in the surface of each block 13 allows each sipe 14 to be linear from the opening to the bottom, in a cross-sectional view in the depth direction which is substantially orthogonal to the extending direction of each sipe 14.

Accordingly, the bottom of the sipe 14 functions as the aforementioned starting point for collapse of the block 13. In addition, since both side portions of the sipe 14 of the block 13 tend to engage, the traction improves. The improvement in traction improves cornering performance and handling stability.

It should be noted that the present invention is not limited to the above-mentioned embodiment, and even if performing modifications, improvements, etc. in the scope of the claims, it will be encompassed in the scope of the present invention.

For example, the wavy shape part of each sipe may be a wavy shape with the period of a trigonometric function. The wavy shape part of each sipe may be a wavy shape in which only the vertex part may be the R shape of a relatively large curvature, and the vertexes are connected with each other with straight lines. R of the vertex, or the radius of curvature of the R portion transitioning from the sipe bridge to the wavy shape part is arbitrary; however, it may be on the order of 0.6 mm, for example.

### EXPLANATION OF REFERENCE NUMERALS

1 tire (pneumatic tire)
10 tread
13 block
14 sipe
110 shoulder sipe
113A opening of shoulder sipe
113B bottom of shoulder sipe
120 central sipe
123A opening of central sipe
123B bottom of central sipe
130 intermediate sipe
133A opening of intermediate sipe
133B bottom of intermediate sipe
ShA amplitude of opening of shoulder sipe
ShB amplitude of bottom of shoulder sipe
CeA amplitude of opening of central sipe
CeB amplitude of bottom of central sipe
MeA amplitude of opening of intermediate sipe
MeB amplitude of bottom of intermediate sipe

## Claims

1. A pneumatic tire (1) comprising a tread (10), wherein:
the tread (10) includes blocks (13) having sipes (14) extending in a direction which intersects a tire-circumferential direction,
each of the sipes (14) has a wavy shape in an extending direction of the sipe (14), the sipe (14) has an opening at a surface of the block (13) and a bottom, and the wavy shape continues from the opening to the bottom, and
amplitude of the sipe (14) is largest at the opening and smallest at the bottom, and the amplitude decreases at a fixed rate of change from the opening toward the bottom, whereby the sipe (14) is linear from the opening to the bottom, in a cross-sectional view in a depth direction which is substantially orthogonal to the extending direction of the sipe (14),
**characterized in that**
a ratio As/Ab is at least 4.0 and no more than 7.0, where AS is amplitude of the opening of the sipe (14) and Ab is amplitude of the bottom of the sipe (14).

2. The pneumatic tire (1) according to claim 1, **characterized in that** the amplitude of the opening of the sipe (14) is at least 0.5 mm and no more than 1.5 mm.

3. The pneumatic tire (1) according to claim 1 or 2, **characterized in that** the amplitude of the bottom of the sipe (14) is at least 0.1 mm and no more than 0.6 mm.

4. The pneumatic tire (1) according to any one of claims 1 to 3, **characterized in that** a width of a gap between opposing inner surfaces of the sipe (14) is at least 0.5 mm and no more than 1.5 mm.

## Patentansprüche

1. Luftreifen (1), umfassend eine Lauffläche (10), wobei:
die Lauffläche (10) Blöcke (13), die Lamellen (14) aufweisen, einschließt, die sich in eine Richtung erstrecken, die eine Reifenumfangsrichtung schneidet,
jede der Lamellen (14) in einer Erstreckungsrichtung der Lamelle (14) eine Wellenform aufweist, die Lamelle (14) an einer Oberfläche des Blocks (13) und an einem Boden eine Öffnung aufweist und die Wellenform sich von der Öffnung bis zu dem Boden fortsetzt, und
eine Amplitude der Lamelle (14) an der Öffnung am größten und an dem Boden am kleinsten ist und die Amplitude mit einer festen Änderungsrate von der Öffnung zu dem Boden hin abnimmt, wobei die Lamelle (14) in einer Querschnittsansicht in einer Tiefenrichtung, die im Wesentlichen orthogonal zu der Erstreckungsrichtung der Lamelle (14) ist, von der Öffnung zu dem Boden linear ist,
**dadurch gekennzeichnet, dass**
ein Verhältnis As/Ab mindestens 4,0 und höchstens 7,0 beträgt, wobei AS die Amplitude der Öffnung der Lamelle (14) ist und Ab die Amplitude des Bodens der Lamelle (14) ist.

2. Luftreifen (1) nach Anspruch 1, **dadurch gekennzeichnet, dass** die Amplitude der Öffnung der Lamelle (14) mindestens 0,5 mm und höchstens 1,5 mm beträgt.

3. Luftreifen (1) nach Anspruch 1 oder 2, **dadurch gekennzeichnet, dass** die Amplitude des Bodens der Lamelle (14) mindestens 0,1 mm und höchstens 0,6 mm beträgt.

4. Luftreifen (1) nach einem der Ansprüche 1 bis 3,
**dadurch gekennzeichnet, dass** eine Breite eines Spalts zwischen gegenüberliegenden Innenoberflächen der Lamelle (14) mindestens 0,5 mm und höchstens 1,5 mm beträgt.

## Revendications

1. Pneumatique (1) comprenant une bande de roulement (10), dans lequel :
la bande de roulement (10) comporte des pavés (13) ayant des lamelles (14) s'étendant dans une direction qui croise une direction circonférentielle du pneu,
chacune des lamelles (14) a une forme ondulée dans une direction d'extension de la lamelle (14), la lamelle (14) a une ouverture au niveau d'une surface du pavé (13) et un fond, et la forme ondulée continue depuis l'ouverture jusqu'au fond, et
l'amplitude de la lamelle (14) est la plus grande à l'ouverture et la plus petite au fond, et l'amplitude diminue à un taux de changement fixe depuis l'ouverture vers le fond, moyennant quoi la lamelle (14) est linéaire depuis l'ouverture jusqu'au fond, dans une vue en coupe transversale dans une direction de profondeur qui est sensiblement orthogonale à la direction d'extension de la lamelle (14),
**caractérisé en ce que**
un rapport As/Ab est d'au moins 4,0 et d'au plus 7,0, où AS est l'amplitude de l'ouverture de la lamelle (14) et Ab est l'amplitude du fond de la lamelle (14).

2. Pneumatique (1) selon la revendication 1, **caractérisé en ce que** l'amplitude de l'ouverture de la lamelle (14) est d'au moins 0,5 mm et d'au plus 1,5 mm.

3. Pneumatique (1) selon la revendication 1 ou 2, **caractérisé en ce que** l'amplitude du fond de la lamelle (14) est d'au moins 0,1 mm et d'au plus 0,6 mm.

4. Pneumatique (1) selon l'une quelconque des revendications 1 à 3, **caractérisé en ce qu'**une largeur d'un espace entre des surfaces internes opposées de la lamelle (14) est d'au moins 0,5 mm et d'au plus 1,5 mm.
